# EUROPÄISCHE PATENTSCHRIFT

(11) **EP 3 365 142 B1**
(45) Veröffentlichungstag und Bekanntmachung des Hinweises auf die Patenterteilung: **30.03.2022**
(21) Anmeldenummer: 16787363.7
(22) Anmeldetag: 17.10.2016
(51) Int. Cl.: B25J 9/16, B25J 19/06, F16P 3/14

(54) **SCHUTZFELDANPASSUNG EINES MANIPULATORSYSTEMS**
PROTECTIVE-FIELD ADJUSTMENT OF A MANIPULATOR SYSTEM
AJUSTEMENT DU CHAMP DE PROTECTION D'UN SYSTÈME DE MANIPULATION

(30) Priorität: 21.10.2015 DE 102015220495
(43) Veröffentlichungstag der Anmeldung: 29.08.2018
(73) Patentinhaber: KUKA Deutschland GmbH, 86165 Augsburg (DE)
(72) Erfinder: WALTHER, Steffen, 80687 München (DE); MAGNANIMO, Vito, 86150 Augsburg (DE)
(74) Vertreter: Mader, Joachim
(86) Internationale Anmeldenummer: PCT/EP2016/074851
(87) Internationale Veröffentlichungsnummer: WO 2017/067876

(56) Entgegenhaltungen:
- EP-A1- 2 048 557
- DE-A1- 10 324 627
- DE-A1-102010 007 025
- DE-A1-102010 007 027

## Beschreibung

### 1. Technischer Bereich

Die vorliegende Erfindung betrifft ein Verfahren zum Betreiben eines Manipulatorsystems, welches insbesondere ein fahrerloses Transportsystem umfassen kann, und wobei ein Schutzfeld des Manipulatorsystems mittels einer Überwachungseinrichtung überwacht wird. Ferner betrifft die Erfindung ein entsprechendes Manipulatorsystem.

### 2. Technischer Hintergrund

Fahrerlose Transportsysteme (FTS) werden häufig in Produktionsbetrieben eingesetzt, um beispielsweise Bauteile oder Werkstücke von einer Arbeitsstation zu einer nächsten Arbeitsstation zu transportieren. Ein fahrerloses Transportsystem kann dabei seinen eigenen Fahrantrieb aufweisen, und automatisch gesteuert werden. Fahrerlose Transportsysteme können auch eingesetzt werden, um Manipulatoren oder Industrieroboter zu bewegen, sodass diese an verschiedenen Arbeitsstationen bestimmte Arbeitsschritte durchführen können.

Generell kann ein fahrerloses Transportsystem als Fördersystem betrachtet werden, welches zumindest ein fahrerloses Transportfahrzeug umfassen kann. Das Fahrzeug kann dabei multi-direktional und insbesondere omni-direktional beweglich sein. Zu diesem Zweck kann es entsprechende omni-direktionale Räder aufweisen, um eine hohe Beweglichkeit und Flexibilität des fahrerlosen Transportsystems zu ermöglichen.

Fahrerlose Transportfahrzeuge werden automatisch gesteuert. Hierzu kann beispielsweise eine fahrzeuginterne Steuereinrichtung verwendet werden, welche entsprechende Antriebe des fahrerlosen Transportsystems ansteuert, um eine gewünschte Bewegung des Fahrzeugs zu bewirken. Der Steuereinrichtung kann ein Programm zugrunde liegen, welches die Bewegung des Fahrzeugs, gekennzeichnet durch die Richtung und Geschwindigkeit, vorgibt.

Um einen sicheren Betrieb eines fahrerlosen Transportsystems in einer Werkhalle zu ermöglichen, sind diese häufig mit Laserscannern ausgerüstet, welche ein sogenanntes Schutzfeld (häufig auch Sicherheitsfläche oder Sicherheitsbereich genannt) überwachen können. Insbesondere kann das Schutzfeld einen horizontalen Bereich um das fahrerlose Transportsystem herum abdecken. Wenn beispielsweise ein Hindernis, wie beispielsweise ein Mensch, in das Schutzfeld eintritt, kann mittels der Laserscanner eine Verletzung des Schutzfeldes erkannt bzw. detektiert werden. In Reaktion hierauf kann das fahrerlose Transportsystem stoppen, um eine mögliche Kollision zu vermeiden. Somit wird eine sichere Mensch-Roboter-Kollaboration (MRK) ermöglicht.

Die Schutzfelder eines Laserscanners werden üblicherweise offline, also beispielsweise zum Zeitpunkt der Inbetriebnahme des fahrerlosen Transportsystems einmalig konfiguriert. Hierbei können mehrere Konfigurationen des Schutzfeldes gespeichert werden, zwischen denen während des Betriebes gewechselt werden kann. Die Anzahl der vorab konfigurierten Schutzfelder ist allerdings begrenzt, da systembedingt generell nicht beliebig viele Schutzfelder vorab definiert und gespeichert werden können.

Es ist bekannt, Schutzfelder auf Basis der Geschwindigkeit des fahrerlosen Transportsystems zu wechseln. Beispielsweise kann bei einer hohen Geschwindigkeit des fahrerlosen Transportsystems ein größeres Schutzfeld verwendet werden, um Verzögerungen und längere Bremswege zu berücksichtigen. Eine Schutzfeldanpassung abhängig von der Umgebung des fahrerlosen Transportsystems ist jedoch nicht bekannt.

In dem Dokument DE 10 2010 046 327 A1 der Anmelderin wird ein Verfahren zur Überwachung eines Manipulators vorgeschlagen, wobei eine Überwachungseinrichtung in einem ersten Betriebsmodus des Manipulators eine erste Sicherheitsfläche und in einem zweiten Betriebsmodus des Manipulators eine, von der ersten verschiedene, zweite Sicherheitsfläche überwacht.

Die EP 2 378 445 A1 schlägt ein System zur sicherheitstechnischen Planung einer industriellen Anlage mit Gefährdungspotenzial vor. Dabei ist eine Gefährdungsanalyse im virtuellen Betrieb aufgrund einer Prozessvisualisierung bzw. Simulation durchführbar, um einen späteren Unfall zu vermeiden.

DE 10 2010 007 025 A1 betrifft ein Verfahren zur Überwachung eines Manipulatorraumes welches die Schritte, Vorgabe einer geometrischen Grenze des zu überwachenden Raumes und Überwachen auf nicht vorgesehene Objekte innerhalb der vorgegebenen Grenze, umfasst.

DE 10 324 627 A1 betrifft ein Verfahren zur Überwachung einer Umgebung einer automatisiert arbeitenden Maschine, bei dem eine erste zu überwachende Zone auf das Eindringen von Objekten überwacht und, wenn ein eindringendes Objekt erfasst wird, ein Nothalt der Maschine durchgeführt wird.

DE 10 2010 007 027 A1 betrifft ein Verfahren zur Überwachung eines Manipulatorraumes eines mobilen Manipulators durch Überwachen des Raumes auf nicht vorgesehene Objekte mittels einer Umgebungserfassungseinrichtung. Es besteht jedoch weiterhin das Bedürfnis, einen möglichst sicheren Einsatz von fahrerlosen Transportsystems zu ermöglichen.

Diese und weitere Aufgaben, die aus der folgenden Beschreibung ersichtlich werden, werden durch ein Verfahren gemäß Anspruch 1 und ein System gemäß Anspruch 10 gelöst.

### 3. Inhalt der Erfindung

Die vorliegende Erfindung betrifft ein Verfahren zum Betreiben eines Manipulatorsystems. Das Manipulatorsystem kann dabei einen Manipulator umfassen, welcher insbesondere eine mobile Basis aufweisen kann. Vorzugsweise umfasst das Manipulatorsystem ein fahrerloses Transportsystem und insbesondere ein fahrerloses Transportfahrzeug, welches vorzugsweise einen Manipulator tragen und bewegen kann. Das Manipulatorsystem ist insbesondere vorzugsweise als Manipulator mit einer mobilen Basis ausgestaltet. Der Fachmann versteht hierbei, dass ein Manipulator aus einer Anzahl an beweglichen, aneinander geketteten Gliedern oder Achsen bestehen kann, und eine Mechanik eines Roboters bilden kann. Ein Roboter wiederum kann ein freiprogrammierbares, programmgesteuertes Handhabungsgerät sein.

Ein Schutzfeld des Manipulatorsystems wird mittels einer Überwachungseinrichtung überwacht. Durch Überwachen des Schutzfeldes kann beispielsweise erkannt werden, dass sich ein Objekt oder Hindernis in dem Schutzfeld befindet, und es kann gegebenenfalls eine entsprechende Reaktion des Manipulatorsystems eingeleitet werden. Die Überwachungseinrichtung umfasst vorzugsweise Mittel, welche beispielsweise die Schutzfeldüberwachung unter Verwendung von Infrarot-, Ultraschall-, parallaktische oder schärfe- bzw. kontrastoptische Entfernungsmessung das Schutzfeld ermöglichen. Die Überwachungseinrichtung kann hierzu optische, opto-elektronische, und/oder bildverarbeitende Systeme verwenden. Vorzugsweise kann die Überwachungseinrichtung ein Multi-Kamerasystem, eine Stereo-Kamera, eine 3D-Kamera und/oder eine Flugzeitkamera umfassen, um die Schutzfeldüberwachung zu ermöglichen. Besonders bevorzugt umfasst die Überwachungseinrichtung einen oder mehrere Laserscanner zur Erfassung von Objekten in dem Schutzfeld. Solche Laserscanner arbeiten zuverlässig und erlauben es, hohe Sicherheitsanforderungen einzuhalten. Generell kann das erfassbare Objekt jeder Körper sein, welcher in einer Umgebung des Manipulatorsystems einen gewissen Raum einnimmt und mittels der Überwachungseinrichtung erfassbar ist oder mittels dieser detektiert werden kann. Die Überwachungseinrichtung muss das Objekt dabei nicht erkennen und identifizieren, es ist vielmehr für einen sicheren Einsatz des Manipulatorsystems ausreichend, dass das bloße Vorhandensein des Objekts in dem Schutzbereich erkannt wird.

Das Verfahren umfasst dabei ein Bereitstellen von Umgebungsinformation betreffend eine Umgebung des Manipulatorsystems. Die Umgebungsinformation kann dabei Information über bekannte Hindernisse in der Umgebung des Manipulatorsystems umfassen. Beispielsweise kann die Umgebungsinformation eine Größe, eine Ausrichtung, eine Position, eine Bewegung, und/oder einen Zustand eines Objekts oder Hindernisses in der Umgebung beschreiben. Diese bekannten Hindernisse können bereits bei einer Programmierung des Manipulatorsystems berücksichtig sein, sodass eine Kollision des Manipulatorsystems mit diesen bekannten Hindernissen durch die Bahnplanung ausgeschlossen ist. Ein unbekanntes Hindernis kann ein Objekt sein, welches zum Zeitpunkt der Programmierung des Manipulatorsystems nicht berücksichtigt wurde, bzw. nicht berücksichtigt werden konnte.

Ferner umfasst das Verfahren ein Anpassen des Schutzfeldes basierend auf der Umgebungsinformation, und ein Überwachen des angepassten Schutzfeldes mittels der Überwachungseinrichtung. Das Schutzfeld kann dabei zumindest teilweise an die Umgebung des Manipulatorsystems angepasst werden, um einen flexiblen Schutz des Manipulatorsystems zu ermöglichen.

Es ist somit vorteilhaft möglich, während des Betriebs des Manipulatorsystems, oder vorzugsweise des fahrerlosen Transportsystems, das zu überwachende Schutzfeld unter Berücksichtigung von Umgebungsinformation anzupassen. Beispielsweise kann ein Schutzfeld verkleinert oder vergrößert werden, abhängig von der Umgebungsinformation. Somit kann das Schutzfeld flexibel angepasst werden, um letztendlich einen flexiblen Einsatz des Manipulatorsystems zu ermöglichen. Die Einsatzmöglichkeiten des Manipulatorsystems werden dabei nicht eingeschränkt. So kann beispielsweise unter Berücksichtigung bekannter Hindernisse in der Umgebung des Manipulatorsystems das Schutzfeld derart angepasst werden, dass eine Verletzung des Schutzfeldes nicht aufgrund der bekannten Hindernisse erfolgen kann. Eine optimale Sicherheit ist dennoch gewährleistet, da unbekannte Hindernisse, wie beispielsweise ein in das Schutzfeld eindringender Mensch, eine Schutzfeldverletzung auslösen, die von der Überwachungseinrichtung erkannt wird.

Vorzugsweise erfolgt das Anpassen des Schutzfeldes weiterhin basierend auf einer Geschwindigkeit des Manipulatorsystems. So kann neben der Umgebungsinformation, welche die Umgebung des Manipulators beschreibt, auch die Eigendynamik des Manipulatorsystems berücksichtigt werden, um das Schutzfeld optimal anzupassen.

Vorzugsweise erfolgen das Bereitstellen der Umgebungsinformation und/oder das Anpassen des Schutzfeldes während einer Bewegung des Manipulatorsystems. Ein Programmablauf muss somit vorteilhaft nicht unterbrochen werden. Der Fachmann versteht, dass diese Schritte auch während eines Stillstandes des Manipulatorsystems durchgeführt werden können.

Vorzugsweise umfasst die Umgebungsinformation eine Umgebungskarte und eine aktuelle Position des Manipulatorsystems. Die Umgebungskarte kann dabei Hindernisse, Objekte oder Körper umfassen, wie beispielsweise Wände, Säulen, Tische, Arbeitsstationen, Korridore, etc.. Die Umgebungskarte muss nicht die vollständige Umgebung des Manipulatorsystems beschreiben, kann aber zumindest Informationen über Hindernisse in der Nähe des Manipulatorsystems beinhalten. In der Umgebungskarte können eine Größe, eine Ausrichtung, und/oder eine Position eines Objekts oder Hindernisses in der Umgebung beschrieben werden. Die aktuelle Position des Manipulatorsystems kann insbesondere hinsichtlich der Umgebungskarte definiert sein. Insbesondere kann die aktuelle Position auch eine Orientierung des Manipulatorsystems beschreiben. Basierend auf der Umgebungskarte und der aktuellen Position des Manipulatorsystems kann das Schutzfeld effizient angepasst werden, da beispielsweise bekannte Hindernisse aus dem Schutzfeld ausgeschlossen werden können, so dass diese nicht zur Verletzung des Schutzfeldes führen. Ferner kann auch basierend auf einer relativen Position des Manipulatorsystems zu einem aus der Umgebungskarte bekannten Hindernis, ein Anpassen des Schutzfeldes ermöglichen, sodass ungewollte Schutzfeldverletzungen aufgrund des bekannten Hindernisses nicht auftreten.

Insbesondere vorzugsweise umfasst die Umgebungskarte Strukturinformation von zumindest einem bekannten Objekt in der Umgebung. Die Strukturinformation kann dabei eine Ausmaße, Größe, Position oder sonstige strukturelle Merkmale des bekannten Objekts beschreiben. Dieses bekannte Objekt kann beispielsweise ein bekanntes Hindernis sein, und als räumlicher Körper in der Umgebung vorliegen. Das Anpassen des Schutzfeldes erfolgt dann derart, dass das Schutzfeld zumindest das bekannte Objekt ausspart. Somit können nur unbekannte Objekte im Schutzfeld zu einer Sicherheitsreaktion des Manipulatorsystems führen, bekannte Objekte hingegen verursachen keine Schutzfeldverletzung und damit verbundene Sicherheitsreaktionen. Es kann somit überprüft werden, ob sich in dem Schutzfeld ein bekanntes Hindernis befindet, und dieses gegebenenfalls aus dem Schutzfeld ausgeschnitten werden, damit dieses im Betrieb nicht zu einer ungewollten Reaktion führt. Vorzugsweise werden dabei solche Objekte aus dem Schutzfeld ausgeschnitten, welche unbeweglich oder zumindest während eines längeren Zeitraumes fest in der Umgebung lokalisiert sind. Auch bewegliche oder häufig bewegte Objekte können aus dem Schutzfeld ausgeschnitten werden, jedoch sollte hier eine regelmäßig aktualisierte Umgebungskarte an das Manipulatorsystem bereitgestellt werden.

Insbesondere vorzugsweise erfolgt das Anpassen des Schutzfeldes ferner derart, dass das Schutzfeld zusätzlich einen durch das bekannte Objekt abgeschatteten Bereich ausspart. Es können somit insbesondere solche Bereiche ausgeschnitten werden, welche aufgrund der Hindernisse nicht mehr durch die Überwachungseinrichtung überwacht werden können. Beispielsweise kann ein Bereich hinter einer bekannten Säule, welcher durch einen Laserscanner nicht einsehbar ist, aus dem Schutzfeld ausgeschnitten werden. Somit kann das Schutzfeld um solche Bereiche reduziert werden, die von der verwendeten Überwachungseinrichtung nicht einsehbar sind, und durch das bekannte Objekt abgeschattet sind. Es können somit solche Bereiche ausgeschnitten werden, die aufgrund bekannter Objekte in der Umgebung nicht mittels der Überwachungseinrichtung überwacht werden können.

Das Anpassen des Schutzfeldes kann vorzugsweise quasikontinuierlich erfolgen. Vorzugsweise kann der Anpassungsprozess zu jedem Zeitschritt wiederholt werden. Insbesondere vorzugsweise kann die Schutzfeldanpassung zu jedem Taktschritt des Systems erfolgen. Dadurch wird für jeden Zeitpunkt eine optimale Sicherheitskonfiguration des Manipulatorsystems gewährleistet. Es kann insbesondere gewährleistet werden, dass bekannte Objekte zu keiner Schutzfeldverletzung führen. Je nach Komplexität und gewünschter Genauigkeit der Überwachung kann die erfindungsgemäße Schutzfeldanpassung zu definierten Zeitpunkten oder in gewünschten Intervallen durchgeführt werden. Das Bereitstellen der Umgebungsinformation umfasst ein Detektieren eines Anpassungssignals. Das Anpassungssignal kann dabei charakteristisch für eine Umgebung des Manipulators sein, und ein effizientes Anpassen des Schutzfeldes unter Berücksichtigung der Umgebung ermöglichen. Das Anpassungssignal kann dabei geeignet sein, ein Anpassen des Schutzfeldes zu steuern. Das Anpassungssignal wird als drahtloses Signal übertragen. Dabei kann das Anpassungssignal mittels Wireless- oder IR-Technologie sicher übertragen werden. Das Detektieren des Anpassungssignals umfasst ein drahtloses Empfangen des Anpassungssignals, wobei das Anpassungssignal von einem stationären Sender drahtlos gesendet wird. Dieser stationäre Sender muss dabei nicht Teil des Manipulatorsystems sein. Insbesondere kann der stationäre Sender separat von einem Manipulator oder fahrerlosen Transportsystem bereitgestellt sein, zum Beispiel ortsfest in der Umgebung des Manipulatorsystems. Der stationäre Sender kann beispielsweise an einem Hindernis in der Umgebung des Manipulatorsystems bereitgestellt sein, und mittels drahtloser Technologie das Anpassungssignal aussenden und an das Manipulatorsystem übertragen. Wenn das Manipulatorsystem das Anpassungssignal drahtlos empfängt, kann entsprechend des Anpassungssignals, welches beschreibend für das Hindernis sein kann, das Schutzfeld angepasst werden.

Insbesondere vorzugsweise wird das Anpassungssignal basierend auf bereitgestellten Positionsdaten des Manipulatorsystems drahtlos gesendet. Die Position des Manipulatorsystems kann beispielsweise mittels GPS-Technologie, einer elektromagnetischen Logik oder mittels RFID-Tags ermittelt werden. Eine Umschaltlogik kann auf Basis der Position des Manipulatorsystems entscheiden, ob das Anpassungssignal gesendet werden soll. Somit kann abhängig der Position des Manipulatorsystems in einer bekannten Umgebung, also beispielsweise abhängig einer relativen Position des Manipulatorsystems zu einem bekannten Hindernis, mittels des Anpassungssignals das Anpassen des Schutzfeldes effizient und situativ gestaltet werden.

Insbesondere vorzugsweise wird das Anpassungssignal zyklisch mit geringer Reichweite drahtlos gesendet. Das Anpassungssignal kann somit kurzstreckig sein, und nur innerhalb einer begrenzten Entfernung empfangbar sein. Beispielsweise kann der stationäre Sender nahe eines Hindernisses bereitgestellt sein, und regelmäßig ein kurzstreckiges Anpassungssignal aussenden, welches die Schutzfeldanpassung hinsichtlich des Hindernisses steuern kann. Wenn das Manipulatorsystem in Empfangsreichweite ist, kann das Anpassungssignal detektiert werden und das Schutzfeld entsprechend angepasst werden.

Insbesondere vorzugsweise kann das Anpassungssignal die Schutzfeldanpassung bei einer definierten Position des Manipulatorsystems steuern. Hierzu kann das Anpassungssignal beispielsweise einmalig an das Manipulatorsystem übertragen werden, und Vorgaben beinhalten, wann bzw. wo eine Schutzfeldanpassung zu erfolgen hat. Unter Berücksichtigung einer aktuellen Position des Manipulatorsystems, die beispielsweise mittels GPS-Technologie laufend ermittelt werden kann, kann das Einleiten der Schutzfeldanpassung genau gesteuert werden.

Insbesondere vorzugsweise umfasst das Detektieren des Anpassungssignals ein Scannen des Anpassungssignals. Das Anpassungssignal kann dabei in Form einer externen Markierung vorliegen, die beispielsweise nahe eines Hindernisses auf dem Boden aufgebracht sein kann. Die Markierung kann elektromagnetischer Art sein, einen RFID-Tag umfassen, oder in Form eines Barcodes oder QR-Codes vorliegen. Somit kann genau gekennzeichnet werden, wo und wie das Schutzfeld in Abhängigkeit der Position des Manipulatorsystems in der Umgebung angepasst werden soll.

Vorzugsweise umfasst das Anpassen des Schutzfeldes ein Wechseln zu einem vordefinierten Schutzfeld. Mittels des Anpassungssignals kann somit ein umgebungsspezifisches Schutzfeld ausgewählt und verwendet werden. Dies ist insbesondere bei häufig wiederkehrenden Schutzfeldanpassungen vorteilhaft, beispielsweise wenn bei einer Korridordurchfahrt des Manipulatorsystems ein an den Korridor angepasstes, schmaleres Schutzfeld verwendet werden soll.

Weiter betrifft die vorliegende Erfindung ein Manipulatorsystem, umfassend insbesondere ein fahrerloses Transportsystem und ferner insbesondere ein fahrerloses Transportfahrzeug, welches vorzugsweise einen Manipulator tragen und bewegen kann. Das Manipulatorsystem umfasst dabei eine Überwachungseinrichtung, die eingerichtet ist, um ein Schutzfeld des Manipulatorsystems zu überwachen. Ferner umfasst das Manipulatorsystem eine Steuereinrichtung, die eingerichtet ist, ein oben beschriebenes Verfahren zum Betreiben des Manipulatorsystems durchzuführen. Hierzu kann das Manipulatorsystem entsprechende Mittel umfassen, die das beschriebene Betreiben des Manipulatorsystems und insbesondere die beschriebene Schutzfeldanpassung ermöglichen.

Der Begriff Steuereinrichtung ist dabei breit zu verstehen, da sie viele, auch dezentral angeordnete Steuervorrichtungen, wie etwa Computer, umfassen kann. Insbesondere kann sie mehrere, unterschiedliche Steuervorrichtungen umfassen, etwa eine Steuervorrichtung zur Steuerung eines fahrerlosen Transportsystems und eine Steuervorrichtung zur Steuerung eines Manipulators, welcher von dem fahrerlosen Transportsystem getragen wird. Alternativ kann die Steuereinrichtung auch nur aus einer einzigen geeigneten Steuervorrichtung bestehen. Die einzelnen Schritte des Verfahrens können dabei auf einem computerlesbaren Medium gespeichert sein.

Die Überwachungseinrichtung umfasst vorzugsweise Laserscanner zur Erfassung von Objekten in dem Schutzfeld. Solche Laserscanner arbeiten zuverlässig und erlauben es, hohe Sicherheitsanforderungen einzuhalten. Das Manipulatorsystem umfasst vorzugsweise ein Mittel zum Bestimmen einer aktuellen Position des Manipulatorsystems, welche auf GPS-Technologie basieren können. Insbesondere vorzugsweise kann auch die Überwachungseinrichtung für eine genaue Positionsbestimmung des Manipulatorsystems verwendet werden. Vorzugsweise umfasst das Manipulatorsystem ein Mittel zum Detektieren eines Anpassungssignals. Vorzugsweise ist ferner ein stationärer Sender zum drahtlosen Senden des Anpassungssignals an das Mittel zum Detektieren des Anpassungssignals bereitgestellt, und das Mittel zum Detektieren des Anpassungssignals umfasst einen Empfänger. Vorzugsweise umfasst das Mittel zum Detektieren des Anpassungssignals einen Scanner, welcher zum Scannen einer externen Markierung eingerichtet ist. Das Anpassungssignal kann dabei vorzugsweise in Form der externen Markierung ausgebildet sein.

Vorzugsweise umfasst das Manipulatorsystem einen Manipulator und ein den Manipulator tragendes fahrerloses Transportsystem. Ein Manipulator-Schutzfeld des Manipulators und ein FTS-Schutzfeld des fahrerlosen Transportsystems werden dabei überwacht und angepasst. Es können somit unterschiedliche Schutzfelder für das fahrerlose Transportsystem und den Manipulator getrennt behandelt werden. Beispielsweise kann so ermöglicht werden, dass ein fahrerloses Transportsystem einen Arbeitstisch als Hindernis wahrnimmt, ein von dem fahrerlosen Transportsystem getragener Manipulator den Tisch jedoch nicht als Hindernis erkennt und somit eine gewünschte Bewegung ausführen kann.

Beide Schutzfelder des Manipulators und dem fahrerlosen Transportsystems können auch in einem gemeinsamen Schutzfeld kombiniert sein. Insbesondere kann eine binäre Kennzeichnung oder auch eine Angabe einer Hindernishöhe bereitgestellt sein, um ein selektives Berücksichtigen des Schutzfeldes von dem Manipulator und dem fahrerlosen Transportsystem zu ermöglichen.

### 4. Kurze Beschreibung der Zeichnungen

Im Folgenden wird die vorliegende Erfindung unter Bezugnahme auf die beiliegenden Figuren näher beschrieben. In den Figuren sind gleiche Teile mit gleichen Bezugszeichen gekennzeichnet. Es zeigen:
Fig. 1 ein Manipulatorsystem mit angepasstem Schutzfeld gemäß einer Ausführungsform;
Fig. 2 ein Manipulatorsystem mit angepasstem Schutzfeld gemäß einer weiteren Ausführungsform;
Fig. 3 ein Manipulatorsystem mit angepasstem Schutzfeld gemäß einer weiteren Ausführungsform;
Fig. 4 ein Manipulatorsystem mit angepasstem Schutzfeld gemäß einer weiteren Ausführungsform;
Fig. 5 ein Manipulatorsystem mit angepasstem Schutzfeld gemäß einer weiteren Ausführungsform; und
Fig. 6 bis Fig. 8 schematisch ein Verfahren zum Betreiben eines Manipulatorsystems gemäß einer weiteren Ausführungsform.

### 5. Beschreibung bevorzugter Ausführungsbeispiele

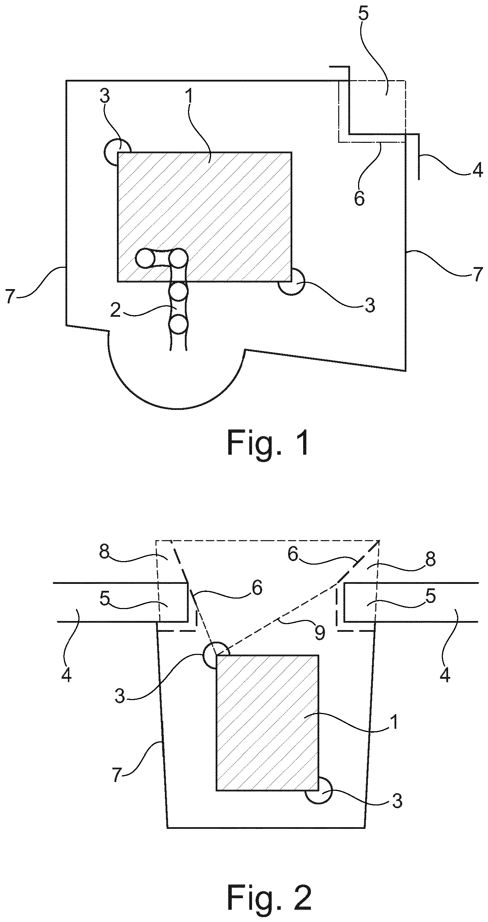

In der Figur 1 ist ein Manipulatorsystem dargestellt, welches ein fahrerloses Transportsystem 1 und einen darauf aufgebrachten Manipulator 2 umfasst. An dem fahrerlosen Transportsystem 1 sind zwei Laserscanner 3 bereitgestellt, welche ein Schutzfeld 7 überwachen. Objekte, die in dem Schutzfeld 7 vorliegen, führen zu einer Schutzfeldverletzung. Diese Verletzung kann als binäres Signal ausgegeben werden und einen Not-Stopp oder eine anderweitige Reaktion des Manipulatorsystems veranlassen.

Ferner ist in der Figur 1 ein Hindernis 4 dargestellt, welches beispielsweise eine Wand sein kann. Das Hindernis 4 stellt dabei insbesondere ein bekanntes Hindernis in der Umgebung des Manipulatorsystems dar. Dieses Hindernis ist somit bekannt und kann in einer Umgebungskarte vermerkt oder gekennzeichnet sein. Erfindungsgemäß wird basierend auf dieser Umgebungskarte ein durch das Hindernis verdeckter Bereich 5 ausgeschnitten. Dadurch ergibt sich die dargestellte Schutzfeldgrenze 6, welche entlang der Kontur des Hindernisses 4 verläuft.

In der Figur 2 ist ebenfalls ein fahrerloses Transportsystem 1 darstellt, an welchem zwei Laserscanner 3 bereitgestellt sind. Das Hindernis 4 liegt hier in Form eines Durchgangs bzw. einer offenen Tür vor. Das Hindernis 4 ist erneut bekannt und kann in einer Umgebungskarte gekennzeichnet sein, die als Umgebungsinformation bereitgestellt sein kann.

Basierend auf der Umgebungsinformation wird zumindest der Bereich 5 aus dem Schutzfeld 7 herausgeschnitten, an welchem sich das Hindernis 4 befindet. Da weiterhin bestimmte Bereiche hinter dem Hindernis, also der Tür, durch den Laserscanner nicht einsehbar sind, wird ebenfalls ein durch das Hindernis 4 abgeschatteter Bereich 8 aus dem Schutzfeld herausgeschnitten, da dieser Bereich 8 nicht durch den Laserscanner 3 einsehbar ist.

Eine Möglichkeit, die durch den Laserscanner nicht einsehbare Bereiche einfach zu bestimmen, kann in der Überprüfung liegen, ob von jedem Punkt innerhalb des Schutzfeldes eine Verbindungslinie zu dem jeweiligen Sensor bzw. Laserscanner vorhanden ist, wobei die Verbindungslinie vollständig im Schutzfeld liegen muss. Insbesondere kann überprüft werden, ob von jedem Punkt entlang eines Polygonzugs, welcher die äußere Grenze des Schutzfeldes bildet, eine solche Verbindungslinie existiert. In der Figur 2 sind schematisch entsprechende Verbindungslinien 9 dargestellt. Als Ergebnis der Überprüfung ergibt sich ein angepasstes Schutzfeld, mit einer umgebungsspezifischen Schutzfeldgrenze 6.

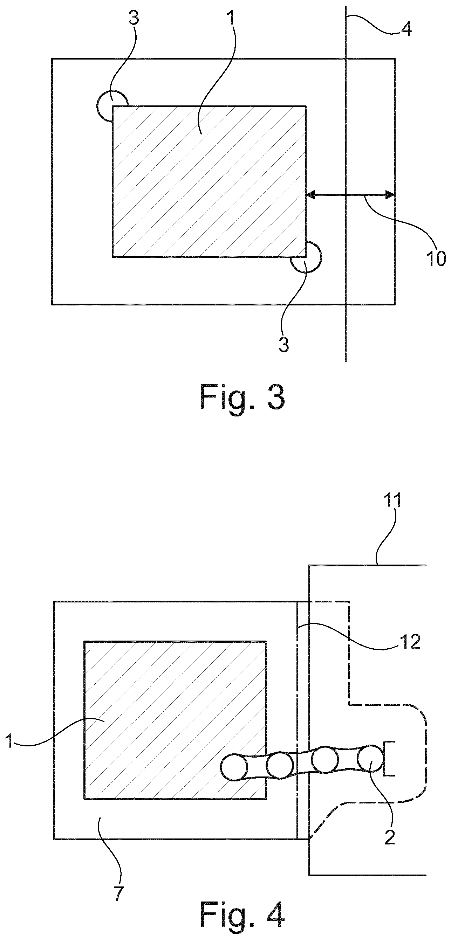

In der Figur 3 ist ein Hindernis 4 in Form einer Wand dargestellt, wobei das Manipulatorsystem 1 zunächst einen Mindest-Sicherheitsbereich einhält. Wenn sich das Manipulatorsystem 1 auf ein bekanntes Objekt zubewegt, kann das Schutzfeld 7 mit fortschreitender Annäherung immer kleiner werden, wie oben beschrieben, und dabei immer die maximale Distanz zum Hindernis vollständig absichern. Für eine bessere Flexibilität kann eine Mindestgröße 10 des Schutzfeldes definiert werden, so dass das Schutzfeld nur auf eine bestimmte minimale Größe reduziert wird und das Manipulatorsystem nicht in das Hindernis hineinfährt. In der in Figur 3 dargestellten Situation wird das Schutzfeld 7 nicht stetig während einer Annäherung reduziert, sondern nur bis zu der Mindestgröße 10. Durch ein weiteres Annähern an das Hindernis 4, wie in der Figur 3 gezeigt, gelangt das Hindernis 4 in das Schutzfeld 7 mit der Mindestgröße 10, sodass dieses vorteilhaft verletzt wird und eine weitere Annäherung an das Hindernis unterbunden werden kann.

In der Figur 4 ist ein Arbeitstisch 11 dargestellt, an welchem ein Arbeitsschritt durchgeführt werden soll. Dieser Arbeitstisch 11 ist als Hindernis in der Umgebungskarte zumindest für das fahrerlose Transportsystem 1 eingetragen. Das fahrerlose Transportsystem 1 soll nicht in diesen Arbeitstisch 11 hineinfahren. Während einer Annäherung des fahrerlosen Transportsystems 1 an den Arbeitstisch 11 wird das entsprechende Schutzfeld 7 des fahrerlosen Transportsystems 1 zyklisch angepasst bzw. verkleinert, sodass dieses Schutzfeld 7 nicht durch den Arbeitstisch 11 verletzt wird.

Der auf dem fahrerlosen Transportsystem 1 bereitgestellte Manipulator 2 soll jedoch den Arbeitstisch 11 nicht als Hindernis wahrnehmen, um einen Arbeitsschritt auf diesem Arbeitstisch 11 durchführen zu können. Hierzu werden in der Umgebungskarte gewisse Bereiche als für den Manipulator 2 irrelevante Hindernisse gekennzeichnet, unter anderem der Arbeitstisch 11. Dies kann durch eine binäre Kennzeichnung oder auch durch die Angabe der Hindernishöhe erfolgen. Hindernisse mit entsprechender Kennzeichnung dürfen die minimale Ausdehnung des Schutzfeldes verletzen und dieses weiter reduzieren. Somit kann der Manipulator 2 auf dem Arbeitstisch 11 Arbeiten durchführen, ist dabei allerdings auch nicht mehr durch die Sicherheitssensorik bzw. Laserscanner geschützt. Der Fachmann versteht, dass der Manipulator 2 zusätzlich durch andere Schutzmechanismen abgesichert werden kann.

Weiterhin können auch beispielsweise hängende Hindernisse als Hindernisse für den Manipulator 2 gelten, während das fahrerlose Transportsystem 1 unter diesen Hindernissen hindurchfahren kann. Derartige Hindernisse werden dann für das Transportsystem 1 als irrelevant gekennzeichnet.

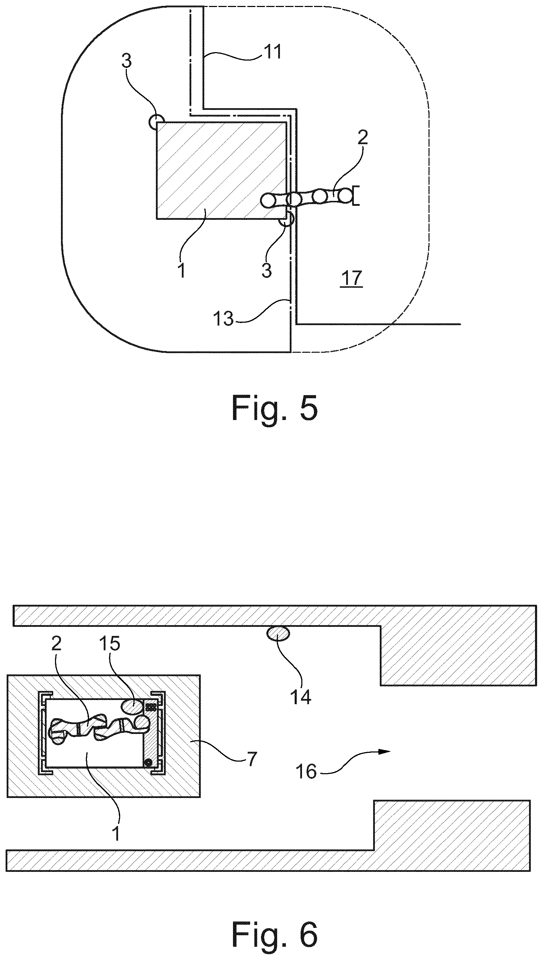

Figur 5 zeigt eine weitere Ausführungsform, bei der eine stationäre Tätigkeit abgesichert wird. Hier kann auch eine Absicherung einer stationären Arbeitsstation mit den Laserscannern während eines Arbeitsschrittes des Manipulators erfolgen. Dabei kann ein an die bekannte Umgebungskontur angepasstes Schutzfeld berechnet werden, oder ein optimales Schutzfeld ohne Berücksichtigung der Umgebung bestimmt werden, aus welchem anschließend bekannte Konturen der Arbeitsstation 17 ausgeschnitten werden können. In der in Figur 5 dargestellten Situation wird der Arbeitstisch 11 bzw. die Arbeitsstation 17 aus dem idealen Schutzfeld ausgespart, da sich dort keine unbekannten Hindernisse, also beispielsweise keine Menschen, befinden oder aufhalten können. Es ergibt sich somit eine Schutzfeldgrenze 13, welche entlang der Kontur des Arbeitstisches 11 verläuft.

Die Überwachung eines Manipulatorsystems ist so nicht mehr durch eine begrenzte Anzahl möglicher Konfigurationen eines Schutzfeldes begrenzt. Vielmehr kann laufend während des Betriebs des Manipulatorsystems eine dynamische Anpassung des Schutzfeldes erfolgen. Das Schutzfeld kann online unter Verwendung von Umgebungsinformation laufend und dynamisch angepasst werden. Annährungsvorgänge an bekannte Objekte, Durchfahrten von engen Korridoren, und eine Absicherung der Zugänglichkeit an Arbeitsstationen über die Sicherheitssensorik sind möglich. Auch auf fahrerlosen Transportsystemen montierte Manipulatoren können, unter Berücksichtigung bekannter Hindernisse und deren Bedeutung für den Arbeitsraum des Manipulators, flexibel abgesichert werden.

In der Ausführungsform der Figuren 6-8 ist ein Manipulatorsystem dargestellt, umfassend ein fahrerloses Transportsystem 1 und einen darauf montierten Manipulator 2. Das fahrerlose Transportsystem 1 bewegt sich auf einen schmalen Korridor 16 zu und soll diesen passieren. In der in Figur 6 dargestellten Situation ist das Schutzfeld 7 des Manipulatorsystems zu groß für eine Durchfahrt durch den Korridor 16, und würde bei einer Durchfahrt verletzt werden.

Ferner ist in der Ausführungsform der der Figuren 6-8 ein Sender 14 bereitgestellt, welcher stationär in der Umgebung angebracht ist. Dieser sendet ein Signal aus, wenn sich das Manipulatorsystem in der Nähe des Senders 14 befindet. An dem Manipulatorsystem ist ein entsprechender Empfänger 15 bereitgestellt, welcher das Signal detektieren kann.

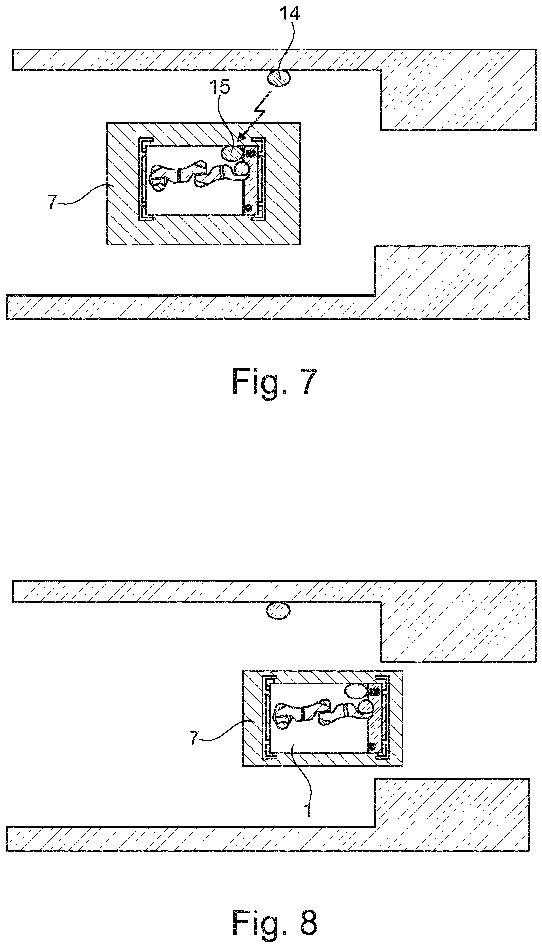

In der in Figur 7 dargestellten Situation dieses Ausführungsbeispiels hat sich das Manipulatorsystem an den Sender 14 und den Korridor 16 angenähert. Infolge der Annäherung wird das Signal oder Anpassungssignal, das von dem Sender 14 an das Manipulatorsystem gesendet wird, mittels des Empfängers 15 empfangen. In Reaktion auf dieses Anpassungssignal wird das Schutzfeld 7 verkleinert, wie in Figur 8 dargestellt. Das Anpassungssignal kann dabei veranlassen, dass ein an den Korridor angepasstes Schutzfeld, hier ein schmäleres Schutzfeld, verwendet wird.

Wie aus Figur 8 ersichtlich, wird nun das kleinere Schutzfeld 7 des Manipulatorsystems überwacht, das an den Korridor angepasst ist, sodass das Manipulatorsystem den Korridor passieren kann, ohne eine Schutzfeldverletzung hervorzurufen.

Der Fachmann versteht, dass Elemente des Ausführungsform der Figuren 6-8 mit Elementen der Ausführungsformen der Figuren 1-5 kombiniert werden können, um eine optimale Schutzfeldanpassung im Sinne der vorliegenden Erfindung entsprechend der jeweiligen Applikation zu ermöglichen.

## Patentansprüche

1. Verfahren zum Betreiben eines Manipulatorsystems, umfassend insbesondere ein fahrerloses Transportsystem (1) und ferner insbesondere ein fahrerloses Transportfahrzeug, wobei ein Schutzfeld (7) des Manipulatorsystems mittels einer Überwachungseinrichtung (3) überwacht wird, das Verfahren aufweisend:
Bereitstellen von Umgebungsinformation betreffend eine Umgebung des Manipulatorsystems, wobei das Bereitstellen der Umgebungsinformation ein Detektieren eines Anpassungssignals umfasst, wobei das Detektieren des Anpassungssignals ein drahtloses Empfangen des Anpassungssignals umfasst, wobei das Anpassungssignal von einem stationären Sender (14) drahtlos gesendet wird;
Anpassen des Schutzfeldes (7) basierend auf der Umgebungsinformation; und
Überwachen des angepassten Schutzfeldes (7) mittels der Überwachungseinrichtung (3).

2. Verfahren nach Anspruch 1, wobei das Anpassen des Schutzfeldes (7) weiter basierend auf einer Geschwindigkeit des Manipulatorsystems erfolgt.

3. Verfahren nach Anspruch 1 oder 2, wobei das Bereitstellen der Umgebungsinformation und/oder das Anpassen des Schutzfeldes (7) während einer Bewegung des Manipulatorsystems erfolgen.

4. Verfahren nach einem der Ansprüche 1 bis 3, wobei die Umgebungsinformation eine Umgebungskarte und eine aktuelle Position des Manipulatorsystems umfasst.

5. Verfahren nach Anspruch 4, wobei die Umgebungskarte Strukturinformation von zumindest einem bekannten Objekt (4, 11) in der Umgebung umfasst, und wobei das Anpassen des Schutzfeldes (7) derart erfolgt, dass das Schutzfeld (7) zumindest das bekannte Objekt (4, 11) ausspart.

6. Verfahren nach Anspruch 5, wobei das Anpassen des Schutzfeldes (7) ferner derart erfolgt, dass das Schutzfeld (7) zusätzlich einen durch das bekannte Objekt abgeschatteten Bereich (5, 8) ausspart.

7. Verfahren nach Anspruch 1, wobei das Anpassungssignal basierend auf bereitgestellten Positionsdaten des Manipulatorsystems drahtlos gesendet wird, oder wobei das Anpassungssignal zyklisch mit geringer Reichweite drahtlos gesendet wird.

8. Verfahren nach einem der Ansprüche 1 bis 7, wobei das Detektieren des Anpassungssignals ein Scannen des Anpassungssignals umfasst, wobei das Anpassungssignal in Form einer externen Markierung vorliegt.

9. Verfahren nach einem der Ansprüche 1 bis 8 wobei das Anpassen des Schutzfeldes (7) ein Wechseln zu einem vordefinierten Schutzfeld (7) umfasst.

10. Manipulatorsystem, umfassend insbesondere ein fahrerloses Transportsystem (1) und ferner insbesondere ein fahrerloses Transportfahrzeug, wobei das Manipulatorsystem eine Überwachungseinrichtung (3) umfasst, die eingerichtet ist, um ein Schutzfeld (7) des Manipulatorsystems zu überwachen, und wobei das Manipulatorsystem eine Steuereinrichtung umfasst, die eingerichtet ist, ein Verfahren nach einem der Ansprüche 1 bis 9 zum Betreiben des Manipulatorsystems durchzuführen.

11. Verfahren oder Manipulatorsystem nach einem der Ansprüche 1 bis 10, wobei die Überwachungseinrichtung (3) Laserscanner zur Erfassung von Objekten (4,11) in dem Schutzfeld (7) umfasst.

12. Manipulatorsystem nach Anspruch 10 oder 11, weiter aufweisend ein Mittel zum Bestimmen einer aktuellen Position des Manipulatorsystems.

13. Manipulatorsystem nach einem der Ansprüche 10 bis 12, weiter aufweisend ein Mittel (15) zum Detektieren eines Anpassungssignals, das Manipulatorsystem insbesondere weiter aufweisend einen stationären Sender (14) zum drahtlosen Senden des Anpassungssignals an das Mittel zum Detektieren des Anpassungssignals, und wobei das Mittel zum Detektieren des Anpassungssignals insbesondere einen Empfänger (15) umfasst.

14. Manipulatorsystem nach Anspruch 13, wobei das Mittel (15) zum Detektieren des Anpassungssignals einen Scanner umfasst, welcher zum Scannen einer externen Markierung eingerichtet ist, und wobei das Anpassungssignal vorzugsweise in Form der externen Markierung ausgebildet ist.

15. Verfahren oder Manipulatorsystem nach einem der Ansprüche 1 bis 14, wobei das Manipulatorsystem einen Manipulator (2) und ein den Manipulator (2) tragendes fahrerloses Transportsystem (1) umfasst, und wobei ein Manipulator-Schutzfeld des Manipulators (2) und ein FTS-Schutzfeld des fahrerlosen Transportsystems (1) überwacht und angepasst werden.

## Claims

1. A method for operating a manipulator system, comprising in particular a driverless transport system (1) and further in particular a driverless transport vehicle, wherein a protective field (7) of the manipulator system is monitored by means of a monitoring device (3), the method comprising:
providing environmental information concerning an environment of the manipulator system, wherein providing the environmental information comprises detecting an adaptation signal, wherein detecting the adaptation signal comprises wirelessly receiving the adaptation signal, wherein the adaptation signal is wirelessly transmitted from a stationary transmitter (14);
adapting the protective field (7) based on the environmental information; and
monitoring the adapted protective field (7) by means of the monitoring device (3).

2. The method according to claim 1, wherein the adapting of the protective field (7) is further based on a speed of the manipulator system.

3. The method according to claim 1 or 2, wherein the providing of the environmental information and/or the adapting of the protective field (7) is done during a movement of the manipulator system.

4. The method according to any one of claims 1 to 3, wherein the environmental information comprises an environmental map and a current position of the manipulator system.

5. The method according to claim 4, wherein the environmental map comprises structure information of at least one known object (4, 11) in the environment, and wherein the adapting of the protective field (7) is performed in such a way that the protective field (7) leaves out at least the known object (4, 11).

6. The method according to claim 5, wherein the adapting of the protective field (7) further takes place in such a way that the protective field (7) additionally leaves out an area (5, 8) shadowed by the known object.

7. The method according to claim 1, wherein the adaptation signal is wirelessly transmitted based on provided position data of the manipulator system, or wherein the adaptation signal is wirelessly transmitted cyclically with a short range.

8. The method of any one of claims 1 to 7, wherein detecting the adaptation signal comprises scanning the adaptation signal, wherein the adaptation signal is in the form of an external mark.

9. The method according to any one of claims 1 to 8, wherein adapting the protective field (7) comprises changing to a predefined protective field (7).

10. A manipulator system, comprising in particular a driverless transport system (1) and further in particular a driverless transport vehicle, wherein the manipulator system comprises a monitoring device (3) configured to monitor a protective field (7) of the manipulator system, and wherein the manipulator system comprises a control device configured to perform a method according to any one of claims 1 to 9 for operating the manipulator system.

11. The method or manipulator system according to any one of claims 1 to 10, wherein the monitoring device (3) comprises laser scanners for detecting objects (4, 11) in the protective field (7).

12. The manipulator system according to claim 10 or 11, further comprising means for determining a current position of the manipulator system.

13. The manipulator system according to any one of claims 10 to 12, further comprising means (15) for detecting an adaptation signal,
the manipulator system in particular further comprising a stationary transmitter (14) for wirelessly transmitting the adaptation signal to the means for detecting the adaptation signal, and wherein the means for detecting the adaptation signal in particular comprises a receiver (15).

14. The manipulator system according to claim 13, wherein the means (15) for detecting the adaptation signal comprises a scanner arranged for scanning an external mark, and wherein the adaptation signal is preferably in the form of the external mark.

15. The method or manipulator system according to any one of claims 1 to 14, wherein the manipulator system comprises a manipulator (2) and a driverless transport system (1) carrying the manipulator (2), and wherein a manipulator protective field of the manipulator (2) and a driverless transport system protective field of the driverless transport system (1) are monitored and adapted.

## Revendications

1. Procédé de fonctionnement d'un système de manipulateur, incluant en particulier un système de transport sans conducteur (1) et, en outre, en particulier un véhicule de transport sans conducteur, un champ de protection (7) du système de manipulateur étant surveillé au moyen d'un équipement de surveillance (3), le procédé comprenant :
fourniture d'information d'environnement relative à un environnement du système de manipulateur, la fourniture de l'information d'environnement incluant une détection d'un signal d'adaptation, la détection du signal d'adaptation incluant une réception sans fil du signal d'adaptation, le signal d'adaptation étant émis sans fil par un émetteur stationnaire (14) ;
adaptation du champ de protection (7) sur la base de l'information d'environnement ; et
surveillance du champ de protection adapté (7) au moyen de l'équipement de surveillance (3).

2. Procédé selon la revendication 1, l'adaptation du champ de protection (7) s'effectuant en outre sur la base d'une vitesse du système de manipulateur.

3. Procédé selon la revendication 1 ou 2, la fourniture de l'information d'environnement et/ou l'adaptation du champ de protection (7) s'effectuant pendant un déplacement du système de manipulateur.

4. Procédé selon une des revendications 1 à 3, l'information d'environnement incluant une carte d'environnement et une position instantanée du système de manipulateur.

5. Procédé selon la revendication 4, la carte d'environnement incluant une information structurelle d'au moins un objet connu (4, 11) dans l'environnement, et l'adaptation du champ de protection (7) s'effectuant de façon que le champ de protection (7) épargne au moins l'objet connu (4, 11).

6. Procédé selon la revendication 5, l'adaptation du champ de protection (7) s'effectuant en outre de façon que le champ de protection (7) épargne en plus une zone (5, 8) occultée par l'objet connu.

7. Procédé selon la revendication 1, le signal d'adaptation étant émis sans fil sur la base de données fournies du système de manipulateur, ou le signal d'adaptation étant émis sans fil cycliquement avec une portée faible.

8. Procédé selon une des revendications 1 à 7, la détection du signal d'adaptation incluant un scannage du signal d'adaptation, le signal d'adaptation se présentant sous la forme d'un marquage externe.

9. Procédé selon une des revendications 1 à 8, l'adaptation du champ de protection (7) incluant un passage à un champ de protection prédéfini (7).

10. Système de manipulateur, incluant en particulier un système de transport sans conducteur (1) et, en outre, en particulier un véhicule de transport sans conducteur, le système de manipulateur incluant un équipement de surveillance (3) qui est agencé pour surveiller un champ de protection (7) du système de manipulateur, et le système de manipulateur incluant un équipement de commande qui est agencé pour exécuter un procédé selon une des revendications 1 à 9 de fonctionnement du système de manipulateur.

11. Procédé ou système de manipulateur selon une des revendications 1 à 10, l'équipement de surveillance (3) incluant un scanner à laser pour détecter des objets (4, 11) dans le champ de protection (7).

12. Système de manipulateur selon la revendication 10 ou 11, comprenant en outre un moyen pour déterminer une position instantanée du système de manipulateur.

13. Système de manipulateur selon une des revendications 10 à 12, comprenant en outre un moyen (15) pour détecter un signal d'adaptation,
le système de manipulateur comportant en particulier en plus un émetteur stationnaire (14) pour l'émission sans fil du signal d'adaptation vers le moyen de détection du signal d'adaptation, le moyen de détection du signal d'adaptation incluant en particulier un récepteur (15).

14. Système de manipulateur selon la revendication 13, le moyen (15) de détection du signal d'adaptation incluant un scanner qui est agencé pour scanner un marquage externe, et le signal d'adaptation étant conçu de préférence sous la forme du marquage externe.

15. Procédé ou système de manipulateur selon une des revendications 1 à 14, le système de manipulateur incluant un manipulateur (2) et un système de transport sans conducteur portant le manipulateur (2), et un champ de protection de manipulateur du manipulateur (2) et un champ de protection de système de transport sans conducteur du système de transport sans conducteur (1) étant surveillés et adaptés.
